# EUROPEAN PATENT APPLICATION

(11) **EP 3 588 460 A1**
(43) Date of publication of application: **01.01.2020**
(21) Application number: 19179674.7
(22) Date of filing: 12.06.2019
(51) Int. Cl.: G08B 21/24, G08B 13/196

(54) **LEFT OBJECT DETECTING SYSTEM**

(30) Priority: 29.06.2018 JP 2018125159
(71) Applicant: Kabushiki Kaisha Toshiba, Minato-ku Tokyo 105-0023 (JP); Toshiba Infrastructure Systems & Solutions Corporation, Kawasaki-shi, Kanagawa 212-0013 (JP)
(72) Inventor: NAKAMURA, Kohta, Kawagawa 212-0013 (JP)
(74) Representative: AWA Sweden AB

(57) **Abstract**

A system according to an embodiment includes an analyzing device that includes a first database to store at least image analysis information identifying a person and an object in an image, and determines that the object has been left behind, by using the image analysis information and performing image analysis on video footage captured by cameras installed in locations, associating the identified person with an object carried by the person, and comparing, at timings, the video footage captured by the cameras; and a communication device that includes a second database to store, in association with each other, usage information and ID information of each of users, and transmit, when the analyzing device has determined that the object has been left behind, an alert to the user or a predetermined destination of notification associated with the object left behind.

## Description

### FIELD

Embodiments described herein relate generally to a left object detecting system.

### BACKGROUND

Often, when objects had been left behind, such as objects forgotten or lost by their users, and were recovered, but their users had already left the scene, for example, a vehicle used by a large crowd of unspecified persons such as a railway car, an aircraft, a ship, a local bus etc., or a facility where a large crowd of unspecified persons gathers, such as a train station, an airport, a live house, a cinema, a theater, a stadium, an amusement park, a commercial facility etc., owners could not be identified quickly.

Users who noticed that they had forgotten or lost objects often had to search in different locations in mind, visit distant lost-and-found offices, or go through a variety of procedures to receive back the objects that they had forgotten or lost.

It is also expected that, by preventing suspicious objects from being brought into facilities at which many persons gather, such as vehicles or live houses, terrorism is avoided in advance, and that safety of passengers is guaranteed.

So far, it has been proposed that radio tags be attached to, for example, the hand luggage of passengers, and that the carry-in and -out of hand luggage be managed by IC card readers/writers installed at entry/exit gates.

However, managing luggage as described above by attaching radio tags requires the actual attaching of the radio tags and installing the equipment needed for managing, thus making it difficult to keep luggage management costs low.

Surveillance done by, for example, security guards or crew members of vehicles or facilities used by an unspecified large amount of persons using the video footage captured by cameras installed in various locations has been mainly done to check for suspicious persons. However, visually ascertaining whether or not user luggage or a portable item has been left behind has previously been difficult.

### BRIEF DESCRIPTION OF THE DRAWINGS

FIG. 1 is a view schematically showing an example configuration of a left object detecting system according to an embodiment.
FIG. 2 is a timing chart explaining an example operation of the left object detecting system according to the embodiment.
FIG. 3 is a flowchart explaining an example operation of the left object detecting system according to the embodiment.

### DETAILED DESCRIPTION

The left object detecting system according to an embodiment comprises: an image analyzing device including a first database storing at least image analysis information for identifying persons and objects appearing in images, and configured to determine whether or not an object has been left behind by using the image analysis information and performing image analysis of video footage captured by cameras installed in a plurality of locations, associating identified persons with objects carried by the persons, and comparing, at a plurality of timings, the video footage captured by the cameras; and a communication device including a second database that stores usage information in association with identification (ID) information of a plurality of users, and configured to transmit, when the image analyzing device has determined that an object has been left behind, an alert to the user associated with the object left behind or to a predetermined destination of notification.

Hereinafter, the left object detecting system according to the embodiment will be described in detail with reference to the drawings.

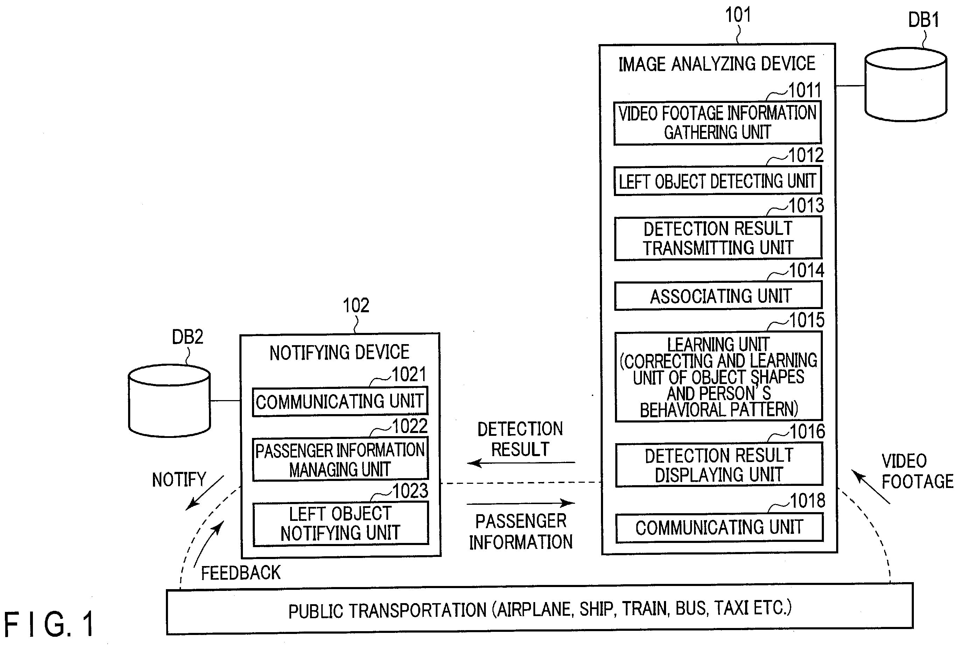

FIG. 1 is a view schematically showing an example configuration of the left object detecting system according to the embodiment.

The left object detecting system according to the present embodiment is configured to detect an object left behind in a vehicle used by unspecified persons, such as an aircraft, a ship, a railway car, a bus, a taxi etc., and includes an image analyzing device 101 and a communication device 102.

The image analyzing device 101 is an arithmetic device including at least one processor such as, for example, a CPU (Central Processing Unit) or an MPU (Micro Processing Unit), and a memory storing a program to be executed by the processor, wherein a software (program) is installed to realize a process explained further below.

The image analyzing device 101 includes a first database DB1 storing at least image analysis information for identifying persons and objects in images obtained from video footage, uses the image analysis information to perform image analysis of video footage captured by cameras installed in a plurality of locations, associates the identified persons with objects carried by the persons, and compares, at multiple timings, the video footage captured by the cameras to determine whether or not an object has been left behind.

The image analyzing device 101 gathers the video footage (moving images or still images) captured by the plurality of cameras installed in, for example, a vehicle or a transportation facility, such as a train station, an airport etc., analyzes the obtained images, associates the objects with the persons, and detects an object as left behind based on the distance between the objects and the persons and the like.

It should be noted that the image analyzing device 101 may be installed to vehicles such as railway cars, aircrafts, ships, buses, taxis and the like, and may be installed at ground facilities such as train stations, airports, ports, bus terminals and the like. When installed in a vehicle, the image analyzing device 101 facilitates the transmission of the video footage gathered by the cameras installed in the plurality of locations in the vehicle. The image analyzing device 101 may also be installed in a facility such as a train station or an airport. In any case, the image analyzing device 101 can gather video footage from a plurality of cameras installed in a plurality of locations of a plurality of vehicles or facilities such as train stations, airports, ports etc. being managed.

The image analyzing device 101 includes a video footage information gathering unit 1011, a left object detecting unit 1012, a detection result transmitting unit 1013, an associating unit 1014, a learning unit 1015, a detection result displaying unit 1016, a communicating unit 1018, and a (first) database DB1.

The video footage information gathering unit 1011 can gather the video footage captured by the cameras installed in the plurality of locations. The video footage information gathering unit 1011 can, for example, receive video footage captured at a transportation facility, and store the video footage in association with information on the location and time of the capturing and the like in the database DB1. It should be noted that the video footage information gathering unit 1011 may manage the video footage such that at least video footage is stored in the database DB1 reaching back from the current time to a predetermined time in the past, or such that video footage prior to the predetermined time may be deleted from the database DB1.

The video footage information gathering unit 1011 does not need to gather all video footage constantly captured by the plurality of cameras, and can gather only that video footage which was captured by each of the cameras installed in the plurality of locations over a predetermined time. The video footage information gathering unit 1011 can further gather only images of parts of the video footage captured by the plurality of cameras.

The learning unit 1015 uses the image analysis information stored in the database DB1 to perform image processing for identifying the persons and the objects in the images based on the video footage gathered by the video footage information gathering unit 1011. The learning unit 1015 also learns to detect objects and persons more accurately by updating the information on object shapes and persons' behavioral patterns from previous image analysis stored in the database DB1 based on, for example, the feedback on past results of detection. The learning unit 1015 can supply the results of the image analysis to the associating unit 1014, and store them in association with the video footage in the database DB1.

It should be noted that the database DB1 stores at least image analysis information including object shapes, persons' behavioral patterns and the like for identifying objects and persons appearing in video footage, and a success count (or: success probability) which is based on the feedback on the results of the image analysis. The database DB1 may, in addition, store a failure count that is based on the feedback on the results of the image analysis. The database DB1 can use the image analysis information to set the result of learning over a predetermined time by the learning unit 1015 as the initial state.

The associating unit 1014 is configured to associate, based on the persons and the objects identified by the learning unit 1015, the persons with the objects carried by the persons, and store the associations in the database DB1. The associating unit 1014 can associate the images of the persons recognized by the learning unit 1015 with the images of the objects of the persons, such as their hand luggage or portable items, and store the associations in the database DB1.

The left object detecting unit 1012 determines whether or not objects carried by the users should be detected as objects that have been left behind. The determination is done by receiving the users' usage information and ID information from the communication device 102, recognizing, based on the information stored in the database DB1 on the association between the person and the objects carried by the person, and the users' usage information, that the user and the object carried by the user belong together, and comparing the plurality of images gathered by the video footage information gathering unit 1011.

The left object detecting unit 1012 can detect an object as left behind of, for example, passengers riding a vehicle, by obtaining, in advance, from a passenger information managing unit (user information managing unit) 1022 in the communication device 102 (see further below), at least the passengers' (users') usage information (on embarking vessels, designated seats, embarking/disembarking train stations/airports/ports, connections, destinations etc.) and ID information, recognizing, using the usage information and information stored in the database DB, that the users and the objects carried by the users belong together, and performing image analysis on the plurality of images gathered by the video footage information gathering unit 1011.

The left object detecting unit 1012 can, for example, deem persons and their pieces of hand luggage, clothes etc. as belonging together, and determine, when there is a difference in when the passenger embarks and disembarks, that an object has been left behind.

The left object detecting unit 1012 can even determine that an object has been left behind when an object has been left behind on, for example, the passenger's seat after the passenger arrived at his destination.

Results of the detection by the left object detecting unit 1012 include at least ID information on, for example, passengers, and the circumstance that objects have been left behind. The detection results are stored in the database DB1 and are supplied via the detection result transmitting unit 1013 to the detection result displaying unit 1016. It should be noted that the left object detecting unit 1012 may store results of the detection in the database DB1 only in case objects have been left behind, or may store them even when no objects have been left behind.

The detection result displaying unit 1016 includes a display unit (not shown) such as, for example, a liquid crystal display device or an organic electroluminescence (EL) display device, and it can display the results of the detection received from the detection result transmitting unit 1013 on the display unit. The display unit may be provided in a location where crew members can see it, for example, on the driver's platform, or in a location in a train station, an airport or a port where surveyors can see it.

The display unit may also be a screen provided in a location where passengers sitting in the rear can see it, for example, in the backrest of the seat, or, as long as passengers are visually informed of the results of the detection, may be a light or the like provided on the ceiling right above the seat or in the armrest or in the backrest where it lights up to notify the passenger that an object has been left behind.

The communicating unit 1018 comprises a communicating circuit that can communicate with the outside over radio or wire. The communicating unit 1018 can transmit the results of the detection from the left object detecting unit 1012 to the outside, and receive information of passengers or feedback information transmitted to the image analyzing device 101 from the outside.

The communication device 102 is an arithmetic device including at least one processor such as, for example, a CPU (Central Processing Unit) or an MPU (Micro Processing Unit), and a memory for storing a program to be executed by the processor, wherein a software (program) is installed to realize a process explained further below.

The communication device 102 includes a second database DB2 that stores at least the usage information of each of the users in association with the users' ID information. The communication device 102 can transmit, when the image analyzing device 101 has determined that an object has been left behind, an alert either to the person (user) associated with the object left behind or to a predetermined destination of notification.

The communication device 102 may be installed in vehicles such as railway cars, aircrafts, ships, buses, taxis and the like, or may be installed in ground facilities such as train stations, airports, ports, bus terminals and the like. The communication device 102 and the image analyzing device 101 may be separated or united, as shown in FIG. 1.

The communication device 102 comprises a communicating unit 1021, the passenger information managing unit (user information managing unit) 1022, a left object notifying unit 1023, and a (second) database DB2.

The database DB2 stores, for example, the usage information, the first and last name, the gender, the contact, the traffic IC card etc. of the respective passenger (user) associated with the ID information for identifying the passenger. The database DB2 may store multiple passengers in groups.

The communicating unit 1021 comprises a communicating circuit that can communicate with the outside over radio or wire. The communicating unit 1021 can transmit the passenger information stored in the database DB2 to the outside, and receive the results of the detection transmitted to the communication device 102 from the outside.

The passenger information managing unit 1022 transmits the usage information and the ID information (passenger information) of multiple users stored in the database DB2 to the image analyzing device 101. The passenger information managing unit 1022 retrieves, for example, from the database DB2, the usage information and the ID information of multiple passengers of the respective transportation service, and transmits the retrieved information via the communicating unit 1021 to the image analyzing device 101 to analyze the images of the respective transportation service.

After the communicating unit 1021 receives the results of the detection via the communicating unit 1021, it can store them in the database DB2 in association with the passengers' ID information.

After the passenger information managing unit 1022 has received the passengers' feedback via the communicating unit 1021, it stores the contents of the feedback in association with the passengers' ID information in the database DB2, and transmits them via the communicating unit 1021 to the image analyzing device 101.

The passenger information managing unit 1022 can transmit the information to the image analyzing device 101 according to a timing, for example, when the passengers embark on the vehicles. If the specific transportation services are aircrafts or ships, the passenger information managing unit 1022 may, for example, transmit the usage information of the passengers using the transportation service to the image analyzing device 101 when the boarding procedure for the passengers has concluded. If the specific transportation service is a railway car, the passenger information managing unit 1022 may, for example, transmit the usage information of the passengers using the transportation service to the image analyzing device 101 when the specific railway car leaves its starting train station or a stopover.

After the left object notifying unit 1023 receives the result from the image analyzing device 101 that an object has been left behind, it transmits an alert to the user associated with the object left behind or to a predetermined destination of notification.

The left object notifying unit 1023 can receive the results of the detection by the image analyzing device 101 via the communicating unit 1021, obtain, from the database DB2, for example, the contacts associated with the passengers' ID information included in the results of the detection, and notify (transmit an alert to) the passengers (or a predetermined destination of notification such as a train station, an airport, a port, a bus terminal, a vehicle, etc.) that objects have been left behind.

The left object notifying unit 1023 may send a notification to, for example, the e-mail address or the telephone number designated as the passenger's contact via e-mail or short mail, or may be connected to ticket gates and prompt tickets gates to close the gates and ask passengers to contact a train station attendant when, for example, the passenger holds his traffic IC card over the ticket gate, or it may notice the ground system to play an announcement at, for example, the train station, airport or port.

The left object notifying unit 1023 may also notify, whenever passengers that are associated with objects that have been left behind are transferring, the crew members of the next vehicle, or may transmit, prior to the next vehicle departing, an alert via e-mail or the like.

Hereinafter, an example operation of the left object detecting system will be described.

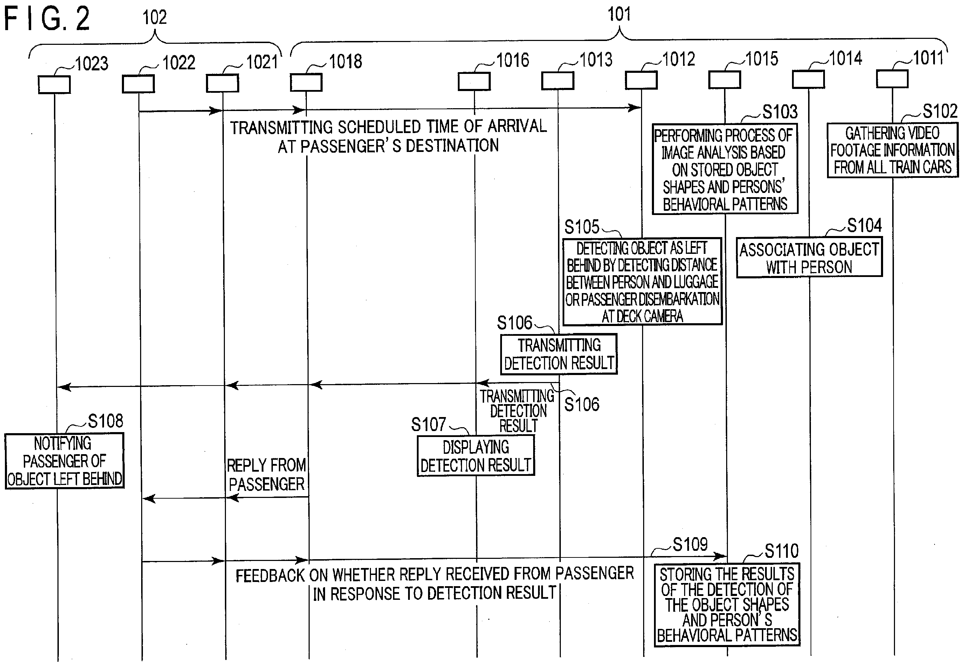

FIG. 2 is a timing chart explaining an example operation of the left object detecting system according to the embodiment.

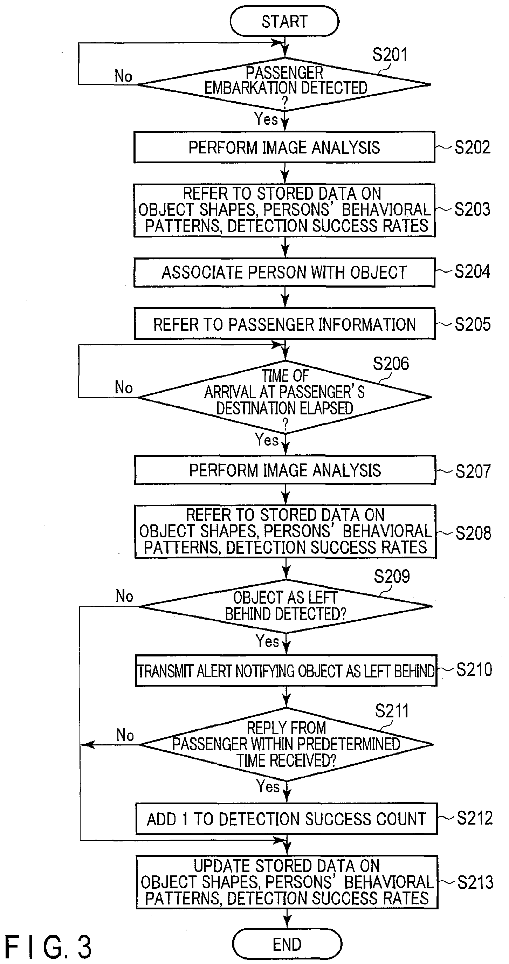

FIG. 3 is a flowchart explaining the example operation of the left object detecting system according to the embodiment.

The example operation of detecting objects left behind will hereafter be a railway car that has passenger seats designated in advance.

### (S102)

As the image analyzing device 101 detects that passengers are embarking (step S201), the video footage information gathering unit 1011 starts gathering, prior to detecting objects as being left behind, video footage captured by the cameras installed in a plurality of locations at the train station or inside the railway car. The video footage information gathering unit 1011 can gather the video footage of, for example, all the railway cars of a train.

Even though the video footage information gathering unit 1011 gathers video footage from the time that the passenger embarks on the railway car at, for example, the starting train station until he disembarks from the railway car at his train station of destination, there is no need to gather video footage during the entire time. The footage may be gathered only during the times when the passenger embarks or disembarks, for example, at a predetermined time around the time when the railway car arrives or leaves.

### (S103)

The learning unit 1015 performs image analysis using the video footage gathered by the video footage information gathering unit 1011 to recognize persons and objects (step S202). The results of the analysis by the learning unit 1015 are stored in the database DB1.

### (S104)

The associating unit 1014 is configured to access the database DB1 (step S203), associate the persons with the objects recognized by the learning unit 1015, and store the associations in the database DB1 (step S204). The associating unit 1014 may associate the persons with the objects as, for example, groups, and store them in the database DB1.

The passenger information managing unit 1022 in the communication device 102 retrieves, from the database DB 2, the usage information and the ID information of the passengers that are using the specific transportation service, and transmits the information via the communicating unit 1021 to the image analyzing device 101.

It should be noted that the usage information of the passengers that are using the railway car can be updated as needed after the ticket selling has started until the railway car leaves the train station prior to the final stop. For example, the passenger information managing unit 1022 may transmit updated passengers' information to the image analyzing device 101 when the railway car departs from the each train station.

The left object detecting unit 1012 inside the image analyzing device 101 receives passengers' usage information and ID information via the communicating unit 1018, and stores the information in the database DB1 (step S205).

### (S105)

The left object detecting unit 1012 detects objects left behind by using the passengers' usage information stored in the database DB1 and image information of persons and objects associated with each other.

The left object detecting unit 1012 assumes that a person (or a group of persons) and objects associated with each other belong together, obtains, from information stored in the database DB1, information on the train station at which the passenger should disembark, and determines whether or not the time of arrival at the train station at which the passenger should disembark has elapsed (step S206).

When the left object detecting unit 1012 has determined that the time of arrival at the train station at which the passenger should disembark has elapsed, it performs image analysis unto the images currently being captured by the cameras to recognize the persons and objects (step S207).

By accessing the database DB1 and using the information stored therein, such as, information on the shape of the person's objects, his behavioral patterns, the detection success count or detection success probability (step S207), and comparing the images of the time when the passenger embarked on the railway car to the images currently being captured, the left object detecting unit 1012 determines whether or not an object has been left behind (step S208).

The left object detecting unit 1012 can detect that an object has been left behind when passengers and luggage associated with each other have been, for example, separated from each other for a predetermined amount of time, or when the distance between passengers disembarking and the luggage associated with them exceeds a predetermined distance.

The left object detecting unit 1012 can detect that an object has been left behind (or that wrong luggage has been taken), by comparing video footage at times when passengers embark on the vehicle to images when passengers disembark from the vehicle, and a change has occurred between the persons and the objects associated with each other.

The left object detecting unit 1012 can detect when passengers disembark from vehicles and objects associated with these passengers have remained in the railway cars with the seats of those passengers and the like, by using, for example, passengers' information supplied from the communication device 102 and video footage gathered by the video footage information gathering unit 1011.

It should be noted that the left object detecting unit 1012 may determine that passengers have disembarked from trains at times at which their trains arrive at the train stations of their destination, by using time table information including the times at which the railway cars arrive at the train stations. In other words, the left object detecting unit 1012 can detect that objects associated with passengers have remained in those railway cars in which the seats of the passengers are located and the like, even after a predetermined time has elapsed since the time at which the train has reached the train station of the passenger's destination.

The left object detecting unit 1012 can detect that an object has been left behind (or have not changed location) by obtaining, from a smartphone or the like inside passenger's hand luggage, information on position and the information indicates that the hand luggage is inside the vehicle, even after a predetermined time has elapsed since the time at which the train has reached the train station of the passenger's destination.

The left object detecting unit 1012 can detect that objects associated with passengers doing suspicious things are suspicious objects, by using behavior patterns of suspicious persons stored in the database DB1 and video footage gathered by the video footage information gathering unit 1011.

### (S106)

The left object detecting unit 1012 stores the results of the detection in the database DB1, and transmits them to the detection result displaying unit 1016 and to the communicating unit 1018. It should be noted that the results of the detection by the left object detecting unit 1012 at least needs to include the information on whether or not an object has been left behind and the information on the position where the object left behind is located (the vehicle, the seat number, etc.), or that they may include the images of the objects left behind or information on the passengers associated with the left-behind objects and the like.

### (S107)

The detection result displaying unit 1016 can display the detection results received from the left object detecting unit 1012 and notify whether or not an object has been left behind or the positions of the objects left behind to, for example, to crew member of the railway cars.

The communicating unit 1018 transmits the detection results received from the left object detecting unit 1012 to the communicating unit 1021 of the communication device 102. The communicating unit 1021 transmits the received detection results to the left object notifying unit 1023.

### (S108)

The left object notifying unit 1023 can notify (transmit an alert to) passengers that an object has been left behind when the received results of the detection indicate that an object has been left behind, by using information on the destination of the notification associated with the passenger ID information stored in the database DB2 (step S210).

When passengers' seats are, for example, designated, the left object notifying unit 102 may match information on the passengers registered at the time of ticket purchase or on the passengers previously associated with the traffic IC cards with the positions of the seats, as well as notify smartphones or the like to urge confirmation of luggage at the timing when passengers arriving at their destinations are about to disembark from the vehicle.

The left object notifying unit 1023 may send a notification to, for example, the e-mail address or the telephone number designated as the passenger's contact via e-mail or short mail, or may be connected to the ticket gates to prompt the tickets gates to close the gates and ask passengers to contact the nearest train station attendant when, for example, passengers hold their traffic IC cards over the ticket gates, or may notice ground systems to play announcements at, for example, the train stations, airports or ports.

### (S109)

The passenger information managing unit 1022 remains in stand-by for feedback from passengers (or finders of objects left behind) (step S211) for a predetermined amount of time after notifying that an object has been left behind. When feedback is received, the passenger information managing unit 1022 associates the feedback with the passenger's ID information and stores the feedback content in the database DB2.

If no feedback is received from passengers during the predetermined amount of time of stand-by after notifying that an object has been left behind, the passenger information managing unit 1022 may associate that no feedback was received with the passenger's ID information, and store the association in the database DB2.

The passenger information managing unit 1022 can store feedback contents in association with passengers' ID information in the database DB2 even if, for example, passengers were not notified due to the results of the detection received indicating that no objects have not left behind, but notification (feedback) was given from the ground system or railway car and via the communicating unit 1021 that passengers have an object as left behind.

When the passenger information managing unit 1022 receives feedback from passengers, it transmits, via the communicating unit 1021 and to the image analyzing device 101, feedback information combining the contents of the feedback and the passenger's ID information at the source of the feedback.

When the communicating unit 1018 in the image analyzing device 101 receives the feedback information from the communication device 102, it transmits the feedback information to the learning unit 1015.

### (S110)

When the learning unit 1015 receives the feedback information via the communicating unit 1018 and the results of the image analysis is correct, it updates the information by adding 1 to the success count in the database DB1 (or by updating the success probability) (step S212).

The learning unit 1015 can correct the information stored in the database DB1 based on the contents of the feedback (step S213). By storing the feedback information and the success count in the database DB1, and using the feedback information and the success count to recognize objects or judge persons' behavioral patterns, the learning unit 1015 can improve accuracy of the detection of an object as left behind

It has been established above that thanks to the present left object detecting system according to the embodiment, it is possible to send instant notification to owners, crew members and the like when passengers riding on, for example, railway cars have forgotten their belongings inside the vehicles, and owners no longer have to search around for their belongings or pay extra visits to the lost-and-found offices.

Business operators of railroad companies and the like also have less to manage objects whose owners are unknown, thus cutting down labor costs and the effort of managing lost property.

Furthermore, by detecting suspicious persons or suspicious objects, the system can guarantee the safety of large crowds of passengers.

In other words, a left object detecting system improving user safety and convenience can be provided, as shown in the embodiment.

It should be noted that the learning unit 1015, the associating unit 1014, and the left object detecting unit 1012 of the aforementioned embodiment do not have to perform the image analysis on the entire video footage. For example, when the associating unit 1014 has determined that there are persons without any luggage, it does not associate the persons with the objects. In that case, the step of determining, at the left object detecting unit 1012, whether an object has been left behind or not, from images of persons not associated with any objects, may be omitted.

The left object detecting unit 1012 may determine whether or not an object has been left behind by analyzing, based on the passengers' information, the images of passengers who passed their time of arrival at their destination (or passengers around that time).

The left object detecting unit 1012 can detect objects left behind by recognizing, based on the persons and objects stored in association with each other in the database DB1, that users and objects carried by the users belong together, and using parts of the images in a predetermined radius including the users and the objects carried by the users.

The step of detecting left-behind objects may not have to be performed, depending on the degree of congestion on the vehicle. For example, where one amongst a plurality of railway cars has no passengers, the step of gathering video footage, at the video footage information gathering unit 1011, of that railway car may be omitted. Similarly, where one amongst a plurality of railway cars is overcrowded to the point where it is impossible to determine whether or not any objects have been left behind, the step of detecting left-behind objects may be omitted.

By omitting, as mentioned, the step of detecting left-behind objects, it is possible to send, for example, from the transportation facility to the image analyzing device, only video footage where objects left behind have been detected, thus reducing the amount of power needed for the video footage transmission. Moreover, by cutting down the process of image analysis, the burden on processors can be reduced.

When it is difficult, by the image analysis technique, to detect persons and objects as belonging together, the left object detecting unit 1012 may adjust, at its discretion, the extent (e.g. up to which row in the proximity of the passenger's designated seat) to which to send a notification on left-behind objects.

Besides, not only information from video footage, but information obtained by different kinds of sensors, such as information from audio obtained by audio sensors such as microphones and the like, can be used to improve the accuracy of the detection of objects left behind. It can, for example, be more accurately detected whether objects have been left behind by detecting the sound of objects that passengers drop on the floor.

The learning unit 1015 may adjust weighting of the recognized object shapes according to climate. For example, when it rains or the rain probability on that day is greater that a predetermined value, weighting on similarity of umbrella shapes for when object shapes are to be recognized may be increased.

It should be noted that the image analyzing device 101 and the communication device 102 of the above embodiment do not have to be arranged separately, and may be united. In that case, the same effects are achieved as in the above-mentioned embodiment.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

For example, the above embodiment explained the present system for detecting objects left behind in vehicles such as railway cars, but the present left object detecting system is not limited to that the embodiment. The system may as well be made applicable to, for example, vehicles other than railway cars, or may be made applicable to detection of an object as left behind of users in facilities other than vehicles. In that case, the same effects are achieved as in the above-mentioned embodiment.

## Claims

1. A left object detecting system, comprising:
an image analyzing device that includes a first database configured to store at least image analysis information identifying a person and an object in an image, and determines that the object has been left behind, by using the image analysis information and performing image analysis on video footage captured by cameras installed in a plurality of locations, associating the identified person with an object carried by the person, and comparing, at a plurality of timings, the video footage captured by the cameras; and
a communication device that includes a second database configured to store, in association with each other, usage information and ID information of each of a plurality of users, and transmit, when the image analyzing device has determined that the object has been left behind, an alert to the user or a predetermined destination of notification associated with the object left behind.

2. The left object detecting system according to claim 1, wherein the image analyzing device further comprises:
a video footage information gathering unit configured to gather a plurality of the video footage captured by the cameras;
a learning unit configured to perform, by using the image analysis information, an image processing for identifying the person and the object in an image based on the video footage gathered by the video footage information gathering unit;
an associating unit configured to associate the person and an object carried by the person based on the person and the object identified by the learning unit;
a left object detecting unit configured to judge whether or not an object carried by the user should be detected as left behind, by receiving the usage information and the ID information and recognizing that, based on the information on the person and the object carried by the person associated with each other, and the usage information, the user and the object carried by the user as belonging together; and
a detection result transmitting unit configured to transmit a detection result that an object has been left behind to the communication device.

3. The left object detecting system according to claim 1 or 2, wherein the communication device further comprises:
a user information managing unit configured to transmit a plurality of the usage information and the ID information of the users to the image analyzing device; and
a left object notifying unit configured to receive a detection result that an object has been left behind, and transmit an alert to the user or the predetermined destination of notification associated with the object left behind.

4. The left object detecting system according to claim 3, wherein the left object notifying unit is configured to transmit an alert to the user associated with the object left behind via at least one of: a contactless IC card, an e-mail, a short e-mail of the user.

5. The left object detecting system according to claim 3, wherein
the cameras are installed in a plurality of locations of a transportation facility, and
the predetermined destination of notification includes a ground system of the transportation facility.

6. The left object detecting system according to claim 2, wherein
the cameras are installed in a plurality of locations of a transportation facility, and
the left object detecting unit is configured to detect whether or not an object has been left behind on a vehicle, by receiving the usage information from the communication device, recognizing that, based on the person and the object stored in the first data base in association with each other, the user and the object carried by the user belong together, and comparing, based on the usage information, an image before the user disembarked the vehicle to an image after the user disembarked the vehicle.

7. The left object detecting system according to claim 6, wherein the left object detecting unit is configured to determine that an object has been left behind, if, after comparing the image before the user disembarked the vehicle to the image after the user disembarked the vehicle, a feature of an object carried by the user has changed.

8. The left object detecting system according to claim 6, wherein the left object detecting unit is configured to determine that an object has been left behind, if it is detected that only the user has disembarked the vehicle.

9. The left object detecting system according to claim 2, wherein the left object detecting unit is configured to determine that the user and the object carried by the user are further apart than a predetermined distance.

10. The left object detecting system according to claim 2, wherein the left object detecting unit is configured to not perform a detection of whether an object has been left behind with regard to the person who has not been associated with the object.

11. The left object detecting system according to claim 2, wherein the left object detecting unit is configured to perform the detection of whether an object has been left behind by recognizing, based on the user and the object stored in association with each other in the first database, that the user and the object carried by the user belong together, and using the part of the image of a predetermined range including the user and the object carried by the user.

12. The left object detecting system according to claim 2, wherein the video footage information gathering unit can gather, based on the usage information received from the communication device, a part of the video footage captured by the cameras.

13. The left object detecting system according to claim 3, wherein
the user information managing unit is configured to notify, when a feedback on the alert has been received, the image analyzing device of the feedback's content, and
the first database is configured to store a success count of the result of detection updated based on the feedback's content.
